# EUROPEAN PATENT APPLICATION

(11) **EP 1 839 923 A2**
(43) Date of publication of application: **03.10.2007**
(21) Application number: 06011792.6
(22) Date of filing: 08.06.2006
(51) Int. Cl.: B60J 10/00, B60J 10/08, B60J 5/10

(54) **Closure device for load boxes in transportation vehicles**

(30) Priority: 29.03.2006 ES 200600718 U
(71) Applicant: Miro Bravo, Vicente, 03801 Alcoy (Alicante) (ES)
(72) Inventor: Miro Bravo, Vicente, 03801 Alcoy (Alicante) (ES)
(74) Representative: Isern-Jara, Nuria

(57) **Abstract**

A closure device for the load box of a transportation vehicle, in which said box is constructed of a container (1), the device comprising two independent laterally hinged doors (2) and sealing means on their respective rear faces formed by rubber strips (5,6), having each of such doors (2) a protruding section (4) with a smaller width than the rest of the door (2) on the lower and higher part and on the inner side nearest to the closure hinge (3), said protruding sections (4) having been provided with at least one sealed rubber strip (5) that extends longitudinally along said section, so that, in the closed position of the doors of the box, the sealed rubber strips are in direct contact and fitted frontally with the perimeter frame of the rear face of the container wall (1).

## Description

### OBJECT OF THE INVENTION

The object of this present patent is a closure device for load boxes in transportation vehicles that incorporates significant innovations and advantages compared to the current closure devices.

More specifically the new invention refers to a closure device for load boxes in transportation vehicles, in which said box is basically constructed of a rectangular container that has at least two independent laterally hinged doors on its rear face.

### BACKGROUND TO THE INVENTION

The closure system for current containers or boxes of load boxes in transportation vehicles, such as for example, articulated lorries boxes or containers is basically made up from some strips of rubber of the tab type that close by friction onto a rear frame, generally metallic, being sealing on the inside of the box by means of the surface contact made between the rubber tab or tabs and the rear frame. The rubbers are fixed to the edges of the door in such a way that when the closure operation of the door is carried out the rubber strip is slid along the frame.

In the event of the separation between the door and the frame being excessive, the door will be able to be opened and closed without any difficulty, however, the sealing of the inside of the container will not be adequate. On the other hand, if the space between the door and the frame is very small, a better sealing will be achieved but it will be difficult to open and close the door due to the greater friction between the rubber strip and the rear frame. In addition, owing to the fact that the friction between the rubber and the frame will be greater, the rubber strip will be subjected to greater forces in such a way that a faster deterioration or breakage of the said rubber will be brought about.

### DESCRIPTION OF THE INVENTION

The present invention has been developed for the purpose of providing a closure device that solves the previously stated disadvantages, moreover, providing other advantages that will be clear from the description which is attached below.

The closure device of this present invention is planned for load boxes in transportation vehicles, said box being made up of a container that has a rear face with at least two independently side hinged doors and a sealing means formed by strips of sealing rubber, and it is characterised because of the fact that the door has a protruding section with a smaller width than the rest of the door on the upper, inner part of the door and on the inner side nearer to the hinge, said sections being fitted with, at least one strip of rubber so that, in the closed position of the doors of the box, the rubbers remain in direct contact and are arranged frontally with the perimeter frame of the rear face of the container wall.

Thanks to these characteristics, the opening and closing of the door is carried out completely smoothly as a result of there being no friction and the sealing is guaranteed because a large part of the rubber surface remains in contact with the container frame.

In accordance with another aspect of the invention, the rubber strip is made up from a section that is appreciably circular and a protruding section that is fitted into a groove made on the inner face of the protruding section of the door.

By preference, each one of the side faces of the doors, which are opposed one another, in the closed position, is fitted with a strip of sealed rubber that becomes joined, each strip of rubber being positioned on the lateral face in such a way that it is offset against the other, so that when in said closed position, the rubber strips occupy the space between the two doors.

Additionally, the protruding section has a second sealed rubber strip on the other face situated at a right angle to the other face that has the rubber strip, in this way preventing the formational of a thermal bridge that is made by the situation of the rear frame, closing said rubber by squeezing as in the previously described rubber lip.

The described closure device advantageously allows a reduction in the assembly time and therefore the manufacturing costs of same in comparison with devices of previous techniques.

Other characteristics and advantages of the closure device of the present invention will be come clear from the present description of a preferred embodiment, but it is not exclusive, it illustrates by way of example, but the drawings attached are not by way of limitation, in which:

### BRIEF DESCRIPTION OF THE DRAWINGS

Figure 1 shows a front elevation view of the rear face of a transportation box with the device in accordance with the present invention;
Figure 2 shows transversal section view along the A-A line of Figure 1;
Figure 3 shows transversal section view along the B-B line of Figure 1;
Figure 4 shows transversal section view along the C-C line of Figure 1.

### DESCRIPTION OF THE PREFERRED EMBODIMENT

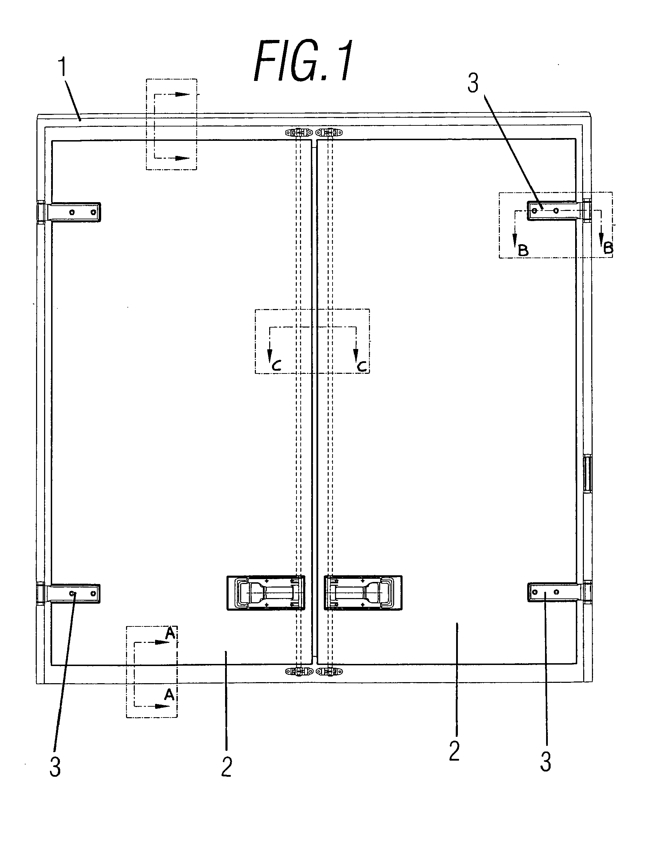

As and how described in Figures 1, the closure device object of the invention has been developed for load boxes in transportation vehicles, in which said box is constructed of a container (1) (the support elements of the container have not been shown as they are not the object of this present invention) that has at least two independent laterally hinged doors (2) on its rear face by means of a pair of hinges (3) located on each one of the doors (2). The door (2) has a protruding section (4) with a smaller width than the rest of the door (2) on the lower and higher part and on the inner side nearest to the closure hinge, said protruding sections (4) having been provided with at least one sealed rubber strip (5) with a rounded shape that extends longitudinally along said section (4) of the door (2), so that, in the closed position of the doors (2) of the box, the rubber strips (5) are in direct contact and fitted frontally with the perimeter frame of the rear face of the container wall (1). In this way, the sealed rubber strips (5) are fitted so that they are frontally forced against the door frame (2) and achieve the sealing being forcibly held against the parallel planes of the door (2) and the rear frame of the container (1).

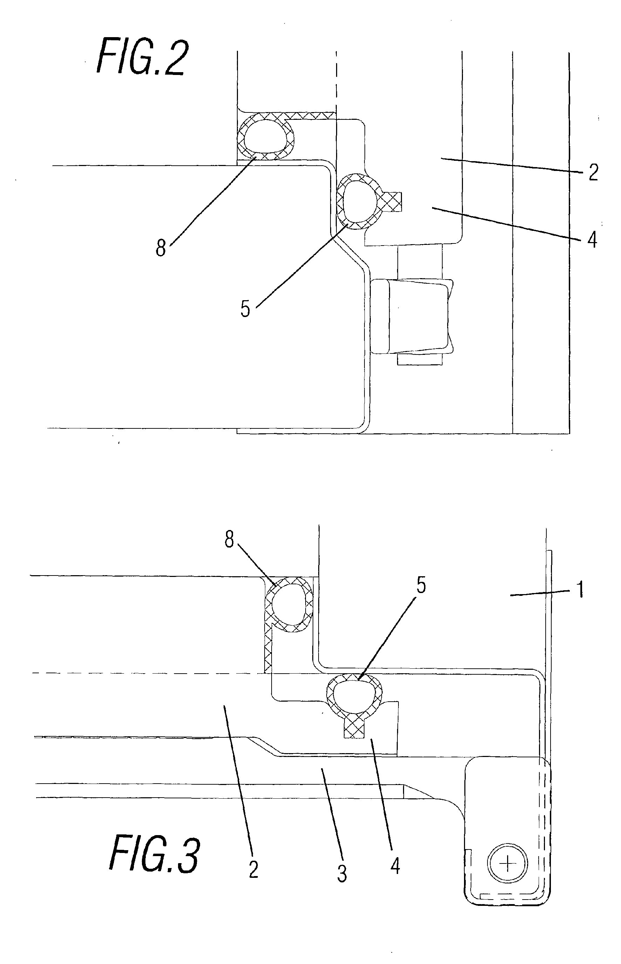

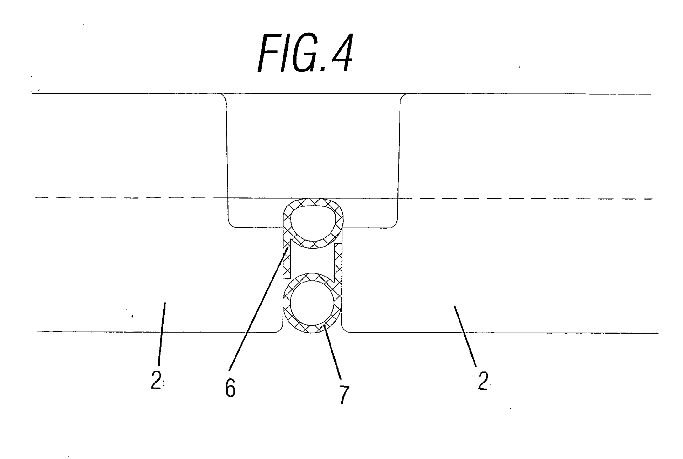

As can be seen in figures 2 and 3, the rubber strip (5) is made up from an appreciably circular section and a second protruding section that is held in a groove made in the inner face of the protruding section of the door (2). The length of the rubber strips (5) is proportional to the length of each side of the door (2) in order to guarantee sealing. In turn, on the other side the protruding section (4), at a right angle to the face that has the rubber strip (5), has a second sealed rubber strip (8).

Additionally, each one of the side faces of the doors (2) that are opposed one another in the closed position have a sealed rubber strip (6, 7) being in an adjacent position, this meaning, one front rubber strip and one rear, so that in the closed position, the rubber strips (6, 7) occupy the space between both doors (2).

The details, shapes, sizes and other accessorial elements, likewise the materials used for the construction of the closure device of the invention can suitably be substituted for others that are technically equivalent and do not deviate from the essentials of the invention or the scope defined by the claims which are included below.

## Claims

1. A closure device for load boxes in transportation vehicles, in which said box is constructed of a container (1) that has two independent laterally hinged doors (2) and sealing means on its rear face formed by rubber strips (5, 6), **characterised in that** the door (2) has a protruding section (4) with a smaller width than the rest of the door (2) on the lower and higher part and on the inner side nearest to the closure hinge (3), said protruding sections (4) having been provided with at least one sealed rubber strip (5) that extends longitudinally along said section, so that, in the closed position of the doors of the box, the sealed rubber strips are in direct contact and fitted frontally with the perimeter frame of the rear face of the container wall (1).

2. A closure device according to claim 1, **characterised in that** the rubber strip (5) is made from a section that is appreciably circular and a protruding section that fits into a groove made on the inner face of the protruding edge of the door (2).

3. A closure device according to claim 1, **characterised in that** each one of the lateral faces of the doors (2) that is opposed one another in the closed position is fitted with a sealed rubber strip (6, 7) joined, each of the rubber strips (6, 7) being positioned in the lateral face so that they are offset against each other, so that in the closed position, the rubber strips (6, 7) occupy the space between both doors (2).

4. A closure device according to claim 1, **characterised in that** on the other side the protruding section (4), at a right angle to the face that has the rubber strip (5), has a second sealed rubber strip (8).
